# EUROPÄISCHE PATENTSCHRIFT

(11) **EP 1 864 853 B1**
(45) Veröffentlichungstag und Bekanntmachung des Hinweises auf die Patenterteilung: **12.09.2012**
(21) Anmeldenummer: 07008477.7
(22) Anmeldetag: 26.04.2007
(51) Int. Cl.: B60N 2/48, B60R 7/04

(54) **Kopfstütze eines Fahrzeugsitzes mit Behältnis**
Headrest of a vehicle seat with container
Appui-tête d'un siège de véhicule doté d'un récipient

(30) Priorität: 09.06.2006 DE 102006026840
(43) Veröffentlichungstag der Anmeldung: 12.12.2007
(73) Patentinhaber: GM Global Technology Operations LLC, Detroit, MI 48265-3000 (US)
(72) Erfinder: Huber, Kirsten, 55124 Mainz (DE)
(74) Vertreter: Daniel, Ulrich W.P.

(56) Entgegenhaltungen:
- DE-B3-102004 016 255
- US-A- 5 628 543
- US-A- 5 795 005

## Beschreibung

Die Erfindung betrifft eine Kopfstütze eines Fahrzeugsitzes, mit einer im rückwärtigen Bereich der Kopfstütze ausgebildeten, verschließbaren Ausnehmung.

Eine derartige Kopfstütze ist aus der DE 36 37 772 A1 bekannt. In die Kopfstütze ist ein hinten offenes Gehäuse eingesetzt, das vom Boden schräg nach außen gerichtete Seitenwände aufweist. Das Gehäuse stützt sich an der schaumstoffgepolsterten Kopfstütze ab. Es ist mit der Kopfstütze verklebt oder auf andere Weise verbunden. Das Gehäuse nimmt schwenkbar einen Spiegelhalter mit Schminkspiegel auf. Zum Verschließen des Gehäuses ist ein Deckel vorgesehen, der um eine am oberen Rand des Gehäuses gebildete, in Querrichtung verlaufende Achse schwenkbar und über einen Rastmechanismus in verschiedenen Winkelstellungen im Bereich der Offenstellung und der Schließstellung ausreichend festgehalten wird.

Eine Kopfstütze eines Fahrzeugsitzes mit einer Ausnehmung ist ferner in der DE 100 29 624 A1 beschrieben. Auch dort ist ein Gehäuse vorgesehen, das mittels eines Deckels verschließbar ist, wobei dieser Deckel in einem unteren Bereich des Gehäuses um eine quer verlaufende Achse in eine im Wesentlichen horizontale Endstellung schwenkbar ist. Das Gehäuse dient beispielsweise zusätzlich der Aufnahme eines Bildschirmes. Auch die Rückenlehne des Fahrzeugsitzes ist mit einem, allerdings größeren Staufach versehen, das in entsprechender Art und Weise mittels eines Deckels verschließbar ist. Dieses Staufach dient der Aufnahme einer Tastatur.

In der DE 199 32 298 A1 ist eine Kopfstütze eines Fahrzeugsitzes beschrieben, die der Aufnahme eines Make-up-Spiegels dient. Die Kopfstütze weist eine seitlich zugängliche Aufnahme auf, die den Make-up-Spiegel aufnimmt. In seiner aus der Kopfstütze herausgezogenen Position ist der Make-up-Spiegel seitlich der Kopfstütze angeordnet.

Aus der als nächstliegender Stand der Technik berücksichtigten Dokument DE 10 2004 016 255 B3 ist es bekannt, eine Kopfstütze eines Kraftfahrzeuges mit einer im rückwärtigen Bereich der Kopfstütze ausgebildeten, verschließbaren Ausnehmung zu versehen. Diese Ausnehmung dient der Aufnahme und Lagerung eines Trägerteils, wobei das Trägerteil in der geschlossenen Stellung annähernd bündig mit der Rückseite der Kopfstütze abschließt und in der geöffneten Stellung von außen zugängliche Mittel aufweist, zum Abstützen oder Anhängen eines Gegenstands an der Rückseite des Kopfstützenkörpers. Bei diesem Gegenstand handelt es sich beispielsweise um einen Haken oder einen Kleiderbügel.

In der US 5,795,005 A ist ein in einem Fahrzeuginnenraum angeordnetes, oben offenes Behältnis zur Aufnahme von Gegenständen beschrieben. Dieses Behältnis ist durch einen vertikal angeordneten, um eine vertikale Achse im Fahrzeug, insbesondere in einer Fahrzeugtür schwenkbaren Deckel sowie einen faltbaren Boden und eine faltbare Seitenwand gebildet. Bei geschlossenem Deckel ist der Boden und die Seitenwand zusammengefaltet. Ist der Deckel aus der Tür geschwenkt, sind der Boden und die Seitenwandung auseinander gefaltet, zur Aufnahme der Gegenstände.

In der US 5,628,543 A ist bei einem Kraftfahrzeug ein in eine Rückenlehne integrierter Skisack beschrieben. Dieser Skisack ist ziehharmonikaförmig ausgebildet und er lässt sich durch Ausziehen verlängern, zur Aufnahme von Skiern.

Aufgabe der Erfindung ist es, eine Kopfstütze der eingangs genannten Art so weiter zu bilden, dass diese kompakt ausgebildet ist, aber dennoch der Unterbringung mindestens eines Gegenstandes außerhalb der eigentlichen Kopfstütze dienen kann.

Gelöst wird die Aufgabe bei einer Kopfstütze der eingangs genannten Art dadurch, dass die Kopfstütze im Bereich der Ausnehmung der Aufnahme und Lagerung eines faltbaren Behältnisses dient, wobei das Behältnis oben offen ist, das Behältnis in seiner zusammengefalteten Stellung im wesentlichen vollständig innerhalb der Ausnehmung angeordnet ist und mit einer nicht faltbaren Wandung die Ausnehmung verschließt, sowie das Behältnis in seiner auseinander gefalteten Stellung teilweise aus der Ausnehmung ragt und in dieser Stellung der Aufnahme mindestens eines Gegenstandes dient, sowie das Behältnis, bezogen auf die zusammengefaltete Stellung des Behältnisses, parallel zur nicht faltbaren Stellung eine weitere, nicht faltbare Wandung aufweist, die mit der Kopfstütze lösbar verbindbar ist.

In seiner zusammengefalteten Stellung ist das Behältnis somit nicht dafür vorgesehen, einen Gegenstand aufzunehmen. Nur dann, wenn das Behältnis auseinandergefaltet ist, dient es der Aufnahme des mindestens einen Gegenstandes. In der zusammengefalteten Stellung ist das Behältnis in die Kopfstütze integriert und bildet damit quasi eine Einheit mit der Kopfstütze.

Die Ausnehmung ist vorzugsweise im Wesentlichen quaderförmig ausgebildet und in der Tiefe derart dimensioniert, dass in der Ausnehmung ausreichend Platz verbleibt, das Behältnis in seiner zusammengefalteten Stellung im Wesentlichen vollständig aufzunehmen. In dieser zusammengefalteten Stellung kann das Behältnis geringfügig über die Kopfstütze hinausstehen, so dass es bequem ergriffen werden kann, um es in die auseinander gefaltete Stellung zu überführen. Es ist andererseits durchaus denkbar, dass die nicht faltbare Wandung des Behältnisses in der zusammengefalteten Stellung des Behältnisses mit der Außenkontur der Kopfstütze fluchtet. In diesem Fall durchsetzt die nicht faltbare Wandung die Ausnehmung. Benachbart der nicht faltbaren Wandung ist in der Kopfstütze beispielsweise eine Vertiefung vorgesehen, um die nicht faltbare Wandung zwecks Auseinanderfaltens des Behältnisses ergreifen zu können.

Es wird als bevorzugt angesehen, wenn die Ausnehmung im Wesentlichen quaderförmig ausgebildet ist. Eine solche Gestaltung ermöglicht die Aufnahme eines in seiner Außenkontur im Wesentlichen quaderförmigen Behältnisses. Die Ausnehmung kann unmittelbar in der Kopfstütze gebildet sein, oder mittelbar in dieser, beispielsweise in einem in die Kopfstütze eingesetzten Gehäuse.

Es wird als vorteilhaft angesehen, wenn das Behältnis durch eine parallele Bewegung der nicht faltbaren Wandung entfaltbar oder zusammenfaltbar ist. Grundsätzlich könnte statt der geradlinigen Auseinanderfalt- bzw. Zusammenfaltbewegung eine gekrümmte Faltbewegung im Sinne einer Schwenkbewegung stattfinden.

Der Faltmechanismus lässt sich auf besonders einfache Art und Weise verwirklichen, wenn er ziehharmonikaartig wirksam ist.

Die erfindungsgemäße Gestaltung des Behältnisses sieht vor, dass dieses, bezogen auf die zusammengefaltete Stellung des Behältnisses, parallel zur nicht faltbaren Wandung eine weitere nicht faltbare Wandung aufweist, die mit der Ausnehmung lösbar verbindbar, insbesondere rastierend verbindbar ist.

Zweckmäßig ist das Behältnis mit einem Rahmen oder einem Gehäuse lösbar verbindbar, insbesondere mittels einer Clipsverbindung verbindbar. Dies ermöglicht es, das Behältnis von der Kopfstütze zu demontieren und einfach wieder mit dieser zu verbinden. Dies ist insbesondere dann von Vorteil, wenn das Behältnis gereinigt werden soll, beispielsweise in einer im Haus vorhandenen Spülmaschine.

Die Erfindung bietet somit zusätzlichen Stauraum für Passagiere eines Fahrzeuges, insbesondere für die Fondpassagiere, ohne den Bewegungsfreiraum der Passagiere einzuschränken. Dieser Stauraum ist individuell in der Größe, durch den Faltmechanismus, einstellbar, oder es kann, wenn kein Stauraum gewünscht ist, das Behältnis zusammengefaltet werden. In diesem Fall ist das Behältnis vollständig in die Kopfstütze integriert. Insbesondere dann, wenn das Behältnis nicht um eine Achse ausgekippt, sondern durch eine geradlinige Bewegung ausgefaltet wird, ist das Behältnis vom Raumgewinn her doppelt so groß als zum Beispiel bei einer Kippung.

Das Behältnis bietet zusätzlichen Stauraum für kleine Dinge der Passagiere, wie Brille, Schreibutensilien, Nahrungsmittel, beispielsweise Gummibärchen für die Kinder, Papiertaschentücher. Es kann auch als Müllbehälter dienen. Der Behälter lässt sich einfach zwecks Reinigung entnehmen. Wenn er nicht gebraucht wird, wird er in die zusammengefaltete Stellung überführt und passt sich formschlüssig der Kopfstütze an.

Bevorzugte Weiterbildungen der Erfindung ergeben sich aus den abhängigen Unteransprüchen und der nachfolgenden Beschreibung.

Nachfolgend wird ein Ausführungsbeispiel der Erfindung, ohne hierauf beschränkt zu sein, unter Bezugnahme auf die Zeichnungen näher erläutert. Die Zeichnung zeigt:
- Figur 1: eine räumliche Ansicht der erfindungsgemäßen Kopfstütze mit Behältnis, schräg von hinten gesehen, in der zusammengefalteten Stellung des Behältnisses,
- Figur 2: eine Ansicht gemäß Figur 1, veranschaulicht für die auseinander gefaltete Stellung des Behältnisses und

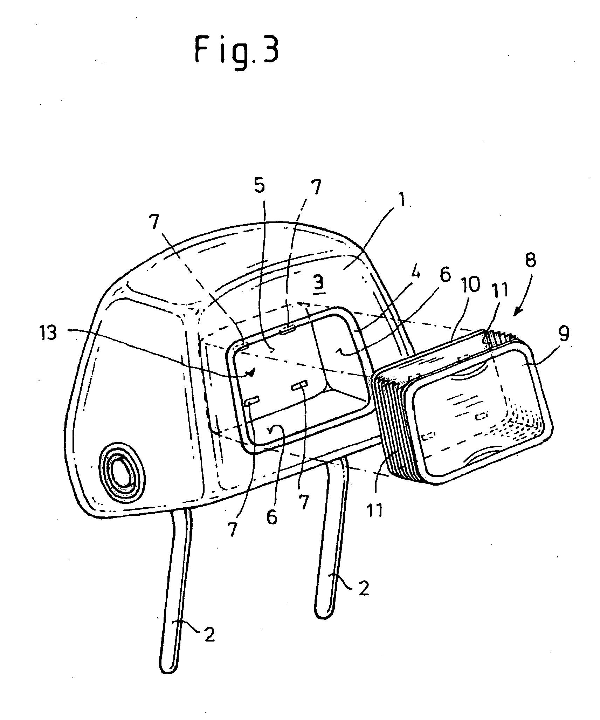

- Figur 3: eine Ansicht gemäß der Figuren 1 und 2, wobei die Kopfstütze und das aus dieser entnommene Behältnis, in nicht vollständig zusammengefalteter Stellung des Behältnisses, veranschaulicht ist.

Veranschaulicht ist eine Kopfstütze 1 eines Fahrzeugsitzes, die zwei Stangen 2 aufnimmt, die in bekannter Art und Weise in Ausnehmungen einer Rückenlehne des Fahrzeugsitzes rastierend einsteckbar sind. Die Kopfstütze 1 ist demnach in der Höhe bezüglich der Rückenlehne verstellbar. Zusätzlich ist über nicht näher veranschaulichte Mittel die Kopfstütze 1 auch in ihrer Neigung verstellbar.

Die rückwärtige Fläche der Kopfstütze 1, somit diejenige Fläche der Kopfstütze, die dem Fondpassagier des Fahrzeuges zugewandt ist, ist mit der Bezugsziffer 3 bezeichnet.

Im Bereich der rückwärtigen Fläche 3 ist die Kopfstütze 1 mit einer Vertiefung versehen, die ein Gehäuse 4 aus Kunststoff aufnimmt. Dieses Gehäuse 4 ist hinten offen gebildet und weist vier vom Boden 5 des Gehäuses 4 geringfügig schräg nach außen gerichtete Seitenwände 6 auf. Im Gehäuse 4 ist dennoch eine Ausnehmung 13 der Kopfstütze 1 gebildet. Das schalenförmige Gehäuse 4 stützt sich an der schaumstoffgepolsterten Kopfstütze 1 ab. In Abstand zum Boden 5 sind die Seitenwände 4 mit in den lichten Raum des Gehäuses 4 vorspringenden Haltenoppen 7 versehen.

Das Gehäuse 4 dient der Aufnahme eines Behältnisses 8 aus Kunststoff, das durch zwei parallel zueinander angeordnete nicht faltbare Wandungen 9 und 10 und ein U-förmiges, die beiden Wandungen verbindendes Zwischenteil 11 gebildet ist. Dieses Zwischenteil 11 ist ein Ziehharmonikaelement, lässt sich somit zusammenfalten. In der zusammengefalteten Position des Zwischenteils 11 sind die beiden Wandungen 9 und 10 nahe zueinander angeordnet, während in der auseinander gefalteten Stellung des Zwischenteils 11 die Wandungen 9 und 10 in größerem Abstand zueinander platziert sind, so dass das Behältnis 8 dann, da es aufgrund der U-Form des Zwischenteils 11 oben offen ausgebildet ist, der Aufnahme eines oder mehrerer Gegenstände dienen kann.

Das Gehäuse 4 weist im Wesentlichen die Form eines Quaders auf, unter Berücksichtigung der geringfügig schräg angeordneten Seitenwände 6. Die Wandung 9 bzw. Wandung 10 ist im Wesentlichen rechteckig ausgebildet ist. Die äußere Kontur der dem Gehäuse 4 zugewandten Wandung 9 des Behältnisses 8 ist so auf die Innenabmessungen, bezogen auf den Boden 5 des Gehäuses 4 abgestimmt, dass die Wandung 10, bei in das Gehäuse 4 eingesetztem Behältnis 8, die Haltenoppen 7 hintergreift. Hierdurch ist das Behältnis 8 mit dem Gehäuse 4 und damit der Kopfstütze 1 verbunden.

In zusammengefalteter Stellung des Behältnisses 8 bildet die andere Wandung 9, somit die dem Boden 5 abgewandte Wandung des Behältnisses 8, im wesentlichen eine Ebene mit der Fläche 3 der Kopfstütze 1 und ist klemmend zwischen den Seitenwänden 6 des Gehäuses 4 festgelegt. Diese Klemmung kann durch eine Abstimmung der Abmessungen von Wandung 9 und Gehäuse 4 oder aber durch Rastnoppen an der Wandung, die in Rastausnehmungen des Gehäuses 4 eingreifen, erfolgen.

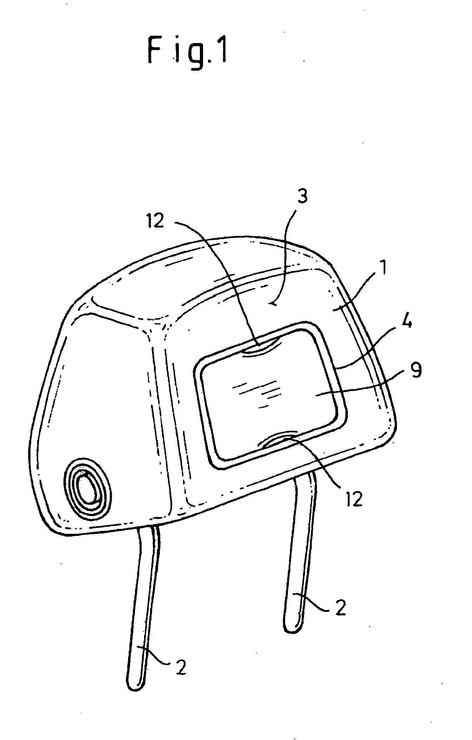

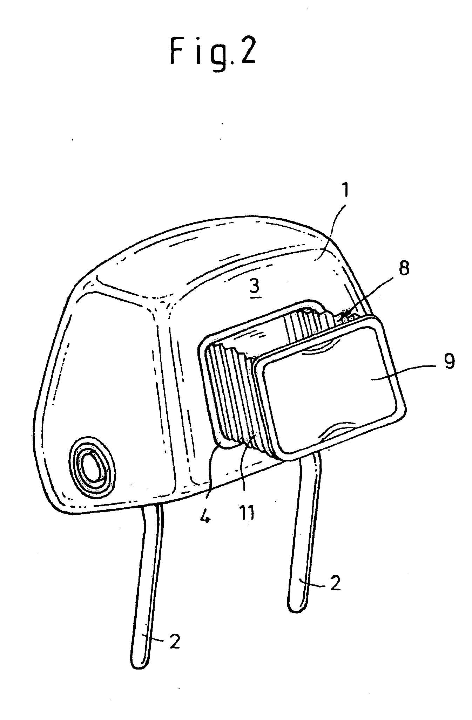

Um die Wandung 9 zum Öffnen des Behältnisses 8 günstig ergreifen zu können, ist die Wandung 9 oben und unten mit einer Einwölbung 12 versehen, im Bereich derer die Wandung 9 ergriffen und diese von der Kopfstütze 1 senkrecht zur Fläche 3 weggezogen werden kann. Durch das Auseinanderfalten des Behältnisses 8 - ausgehend von der Position nach Figur 1 - ergibt sich im Behältnis 8 ein relativ großer Stauraum, der geeignet ist, diverse Gegenstände aufzunehmen, zum Beispiel Papiertaschentücher, eine Brille, Schreibutensilien, Nahrungsmittel, wie Gummibärchen für Kinder. Andererseits kann das Behältnis der Aufnahme von Müll dienen. Die auseinander gefaltete Stellung des Behältnisses 8 ist in Figur 2 veranschaulicht.

Ist das Behältnis 8 leer, kann es wieder zusammengefaltet werden, in die in Figur 1 gezeigte Ausgangsstellung.

Um das Behältnis 8 zu reinigen, braucht es nur aus der Kopfstütze 1 entnommen werden. Es wird durch Ergreifen der Wandung 9 weiter herausgezogen, bis die Wandung 10 außer Eingriff mit den Haltenoppen 7 des Gehäuses gelangt. Nach dem Reinigen des Behältnisses 8 wird dieses einfach wieder in das Gehäuse 4 eingesteckt, in die in Figur 1 gezeigte Stellung, wobei durch Aufbringen des Drucks über die Wandung 9 und das Zwischenteil 11 auf die Wandung 10 diese Wandung 10 in Hintergriff mit den Haltenoppen 7 des Gehäuses 4 gelangt.

### Bezugszeichenliste

- Kopfstütze: 1
- Stange: 2
- Fläche: 3
- Gehäuse: 4
- Boden: 5
- Seitenwand: 6
- Haltenoppen: 7
- Behältnis: 8
- Wandung: 9
- Wandung: 10
- Zwischenteil: 11
- Einwölbung: 12
- Ausnehmung: 13

## Patentansprüche

1. Kopfstütze (1) eines Fahrzeugsitzes, mit einer im rückwärtigen Bereich der Kopfstütze (1) ausgebildeten, verschließbaren Ausnehmung (13), **dadurch gekennzeichnet, dass** die Kopfstütze (1) im Bereich der Ausnehmung (13) ein faltbares Behältnis (8) aufnimmt und lagert, wobei das Behältnis (8) oben offen ist, das Behältnis (8) in seiner zusammengefalteten Stellung im wesentlichen vollständig innerhalb der Ausnehmung (13) angeordnet ist und mit einer nicht faltbaren Wandung (9) die Ausnehmung (13) verschließt, sowie das Behältnis (8) in seiner auseinander gefalteten Stellung teilweise aus der Ausnehmung (13) ragt und in dieser Stellung der Aufnahme mindestens eines Gegenstands dient, sowie das Behältnis (8), bezogen auf die zusammengefaltete Stellung des Behältnisses (8), parallel zur nicht faltbaren Wandung (9) eine weitere, nicht faltbare Wandung (10) aufweist, die mit der Kopfstütze (1) lösbar verbindbar ist.

2. Kopfstütze nach Anspruch 1, **dadurch gekennzeichnet, dass** die Ausnehmung (13) im Wesentlichen quaderförmig ausgebildet ist.

3. Kopfstütze nach Anspruch 1 oder 2, **dadurch gekennzeichnet, dass** das Behältnis (4) durch eine parallele Bewegung der nicht faltbaren Wandung (9) entfaltbar oder zusammenfaltbar ist.

4. Kopfstütze nach einem der Ansprüche 1 bis 3, **dadurch gekennzeichnet, dass** die nicht faltbare Wandung (9) in der zusammengefalteten Stellung des Behältnisses (8) im Wesentlichen eine Ebene mit der Außenfläche (3) der Kopfstütze bildet.

5. Kopfstütze nach einem der Ansprüche 1 bis 4, d**adurch gekennzeichnet,** dass die weitere, nicht faltbare Wandung (10) mit der Kopfstütze (1) rastierend verbindbar ist.

6. Kopfstütze nach einem der Ansprüche 1 bis 5, **dadurch gekennzeichnet, dass** das Behältnis (8) mit einem Gehäuse (4) oder einem Rahmen der Kopfstütze lösbar verbindbar, insbesondere mittels einer Clipsverbindung verbindbar ist.

7. Kopfstütze nach einem der Ansprüche 1 bis 6, **dadurch gekennzeichnet, dass** das Behältnis (8) aus Kunststoff besteht.

## Claims

1. A headrest (1) of a vehicle seat, comprising a closable recess (13) arranged in the rear region of the headrest (1), **characterized in that** the headrest (1) accommodates and holds a foldable container (8) in the region of the recess (13), with the container (8) being upwardly open, the container (8) being arranged substantially completely within the recess (13) in its folded state and closing the recess (13) with a non-foldable wall (9), and the container (8) protrudes partly from the recess (13) in its unfolded state and is used for accommodating at least one item in this position, and the container (8), relating to the folded state of the container (8), comprises a further non-foldable wall (10) parallel to the non-foldable wall (9), which non-foldable wall (10) is detachably connectible with the headrest (1).

2. A headrest according to claim 1, **characterized in that** the recess (13) is substantially arranged in the shape of a cuboid.

3. A headrest according to claim 1 or 2, **characterized in that** the container (8) can be unfolded or folded together by a parallel movement of the non-foldable wall (9).

4. A headrest according to one of the claims 1 to 3, **characterized in that** the non-foldable wall (9) substantially forms a plane with the outer surface (3) of the headrest in the folded position of the container (8).

5. A headrest according to one of the claims 1 to 4, **characterized in that** the further, non-foldable wall (10) is connectible with the headrest (1) in a latching fashion.

6. A headrest according to one of the claims 1 to 5, **characterized in that** the container (8) is detachably connectible with a housing (4) or a frame of the headrest, especially by means of a clip connection.

7. A headrest according to one of the claims 1 to 6, **characterized in that** the container (8) consists of plastic.

## Revendications

1. Appuie-tête (1) d'un siège de véhicule, avec un creux (13) pouvant être fermé formé dans la partie arrière de l'appuie-tête (1), **caractérisé en ce que** l'appuie-tête reçoit et soutient au niveau du creux (13) un récipient (8) pliable, lequel récipient (8) est ouvert vers le haut, le récipient (8) dans sa position repliée étant disposé sensiblement en entier à l'intérieur du creux (13) et fermant le creux (13) avec une paroi non pliable (9), et le récipient (8) dans sa position dépliée dépassant partiellement du creux (13) et servant dans cette position à recevoir au moins un objet, et le récipient (8) présentant parallèlement à la paroi non pliable (9), par rapport à la position repliée du récipient (8), une autre paroi non pliable (10) qui peut être reliée de façon amovible à l'appuie-tête (1).

2. Appuie-tête selon la revendication 1, **caractérisé en ce que** le creux (13) est de forme sensiblement carrée.

3. Appuie-tête selon la revendication 1 ou 2, **caractérisé en ce que** le récipient (4) peut être déplié ou replié par un mouvement parallèle de la paroi non pliable (9).

4. Appuie-tête selon l'une des revendications 1 à 3, **caractérisé en ce que** la paroi non pliable (9) forme pour l'essentiel un plan avec la surface extérieure (3) de l'appuie-tête dans la position repliée du récipient (8).

5. Appuie-tête selon l'une des revendications 1 à 4, **caractérisé en ce que** l'autre paroi non pliable (10) peut être reliée en engrènement avec l'appuie-tête (1).

6. Appuie-tête selon l'une des revendications 1 à 5, **caractérisé en ce que** le récipient (8) peut être relié de manière amovible avec un boîtier (4) ou un cadre de l'appuie-tête, en particulier au moyen d'un assemblage clipsé.

7. Appuie-tête selon l'une des revendications 1 à 6, **caractérisé en ce que** le récipient (8) est fait de matière plastique.
